# EUROPÄISCHE PATENTSCHRIFT

(11) **EP 3 721 108 B1**
(45) Veröffentlichungstag und Bekanntmachung des Hinweises auf die Patenterteilung: **29.09.2021**
(21) Anmeldenummer: 18819449.2
(22) Anmeldetag: 29.11.2018
(51) Int. Cl.: F16C 33/34, F16C 33/58, F16C 33/62

(54) **ELEKTRISCH ISOLIERENDES WÄLZLAGER**
ELECTRICALLY INSULATING ROLLING BEARING
PALIER À ROULEMENT ÉLECTRIQUEMENT ISOLANT

(30) Priorität: 05.12.2017 DE 102017128885
(43) Veröffentlichungstag der Anmeldung: 14.10.2020
(73) Patentinhaber: Schaeffler Technologies AG & Co. KG, 91074 Herzogenaurach (DE)
(72) Erfinder: BAGCIVAN, Nazlim, 90480 Nürnberg (DE); BRUGNARA, Ricardo Henrique, 91093 Heßdorf (DE)
(86) Internationale Anmeldenummer: PCT/DE2018/100970
(87) Internationale Veröffentlichungsnummer: WO 2019/110046

(56) Entgegenhaltungen:
- EP-A2- 0 430 873
- DE-A1-102012 202 155
- DE-A1-102016 206 111

## Beschreibung

Die Erfindung betrifft ein elektrisch isolierendes Wälzlager zur Drehlagerung eines rotierenden Bauteils gegenüber einem Tragteil, umfassend einen metallischen Außenring mit einer innenumfangsseitig ausgebildeten ersten Wälzkörperlaufbahnfläche, einen metallischen Innenring mit einer außenumfangsseitig ausgebildeten zweiten Wälzkörperlaufbahnfläche, mehrere zwischen der ersten und der zweiten Wälzkörperlaufbahnfläche wälzend angeordnete metallische Wälzkörper, und eine zumindest teilweise auf dem Außenring und/oder dem Innenring und/oder den Wälzkörpern aufgebrachte Isolationsbeschichtung umfassend mindestens eine Isolationsschicht aus mindestens einem elektrisch nicht-leitenden Material.

Das Einsatzgebiet der Erfindung erstreckt sich insbesondere auf Anwendungen, bei welchen ein rotierendes Bauteil, beispielsweise eine Welle, gegenüber einem Tragteil, beispielsweise einem Gehäuse, drehzulagern ist. Dabei kann im Sinne einer kinematischen Umkehr das Tragteil auch beispielsweise als eine stehende Welle ausgebildet sein, zu welcher sich ein rotierendes Bauteil, beispielsweise ein Zahnrad, dreht. Die Wälzlager der hier interessierenden Art umfassen alle üblichen Wälzlagertypen, insbesondere Kugel-, Tonnen-, Zylinder- oder Kegelrollenlager.

Kommen derartige Wälzlager im Rahmen von stromführenden oder stromerzeugenden Anwendungen zum Einsatz, beispielsweise bei einem Elektromotor mit wälzgelagertem Läufer, so ist es meist im Sinne einer konstruktiven Randbedingung vorgegeben, dass ein elektrischer Stromdurchschlag des rotierenden Bauteils gegenüber dem Tragteil zu vermeiden ist. Dieses Ziel kann durch ein elektrisch isolierendes Wälzlager der gattungsgemäßen Art erreicht werden.

Unter einem "elektrisch isolierenden" Wälzlager wird hierbei im Sinne der Erfindung ein Wälzlager verstanden, bei welchem ein Stromfluß über die Bauteile des Wälzlagers, also von einem ersten Anschußbauteil, an welchem der Außenring angeordnet ist, über die Wälzkörper zum Innenring und weiter zu einem zweiten Anschlußbauteil, an welchem der Innenring angeordnet ist, mittels einer Isolationsbeschichtung im Bereich des Wälzlagers unterbunden ist. Dabei sind die beiden Anschlußbauteile beispielsweise ein rotierendes Bauteil und ein Tragteil.

Aus der EP 0 417 744 A2 geht ein elektrisch isolierendes Gleitlager hervor, dessen Isolationsschicht aus einer Schicht eines elastischen Polymermaterials besteht, welche den Außenring des Wälzlagers umgibt. Die Schicht des elastischen Polymermaterials ist hierbei als ein isolierender Film mit einer Dicke zwischen 0,1 bis 2 mm und einer Shore-Härte von 80A bis 60D sowie einem elektrischen Widerstand von mehr als 100 Megaohm ausgebildet. Die Aufbringung einer solchen außenumfänglichen Isolationsbeschichtung führt zu einer nachteiligen Vergrößerung der äußeren geometrischen Abmessungen des Wälzlagers, insbesondere des Durchmessers, und beeinträchtigt auch den Festsitz des Außenrings im Tragteil, welcher insoweit von den Materialeigenschaften der Isolationsschicht abhängig ist.

Aus der EP 2 815 143 A1 geht eine andere technische Lösung für ein im Hinblick auf die vorliegende Erfindung gattungsgemäßes elektrisch isolierendes Wälzlager hervor, bei welcher der vorgenannte Nachteil dadurch eliminiert wird, dass die Isolationsbeschichtung auf zumindest eine der miteinander korrespondierenden Wälzkörperlaufbahnflächen aufgebracht ist. Daneben wird auch vorgeschlagen, die Wälzkörper entsprechend zu beschichten. Da die Isolationsbeschichtung insoweit unmittelbar im Wälzbereich des Wälzlagers angeordnet wird, ist diese mechanischen Belastungen im Wälzlagerbetrieb ausgesetzt. Es ist angegeben, dass durch eine entsprechende Ausgestaltung der Isolationsbeschichtung sowie der Materialauswahl auch tribologische Eigenschaftsverbesserungen oder ein Verschleißschutz erzielt werden. Die vorbekannte Isolationsbeschichtung umfasst insoweit eine Isolationsschicht aus einer Oxidkeramik, beispielsweise aus A1₂O₃, SiO₂, TiO₂ oder ZrO. Diese Oxidkeramiken sind einerseits elektrische Isolatoren und zeigen andererseits auch eine gewisse mechanische Belastbarkeit, welche insbesondere dem Verschleißschutz zuträglich ist. Die Beschichtung wird dünnschichtig auf die Wälzkörperlaufbahnfläche aufgebracht und beeinträchtigt insoweit nicht die geometrischen Abmessungen des Wälzlagers. In der Praxis gestaltet sich jedoch die Schichtaufbringung oxidkeramischer Dünnschichten auf Wälzkörperlaufbahnoberflächen als recht aufwendig und die oxidkeramischen Schichten sind bruchanfällig.

Die EP 0 430 873 A2 offenbart einen Wälzkörper mit einem Grundkörper aus Stahl und einer reibungs- und verschleißmindernden harten Oberschicht, wobei zwischen dem Grundkörper und der Oberschicht eine Trennschicht aus einem keramischen, elektrisch nicht leitenden Material angeordnet ist. Die Trennschicht ist im Wesentlichen aus mindestens einem Oxid, Nitrid oder Oxynitrid eines Elements der Gruppe IVa (Ti, Zr, Hf), Gruppe Va (V, Nb, Ta), Gruppe Vla (Cr, Mo, W) oder des Aluminiums oder Mischungen daraus gebildet. Als Oberschicht ist insbesondere Wolfram-Karbid-Kohlenstoff, TiC oder TiN offenbart.

Es ist die Aufgabe der vorliegenden Erfindung, ein elektrisch isolierendes Wälzlager mit einer Isolationsbeschichtung dahingehend weiter zu verbessern, dass in fertigungstechnisch reproduzierbar einfacher Weise eine wirksame elektrische Isolationswirkung erreicht wird.

Die Aufgabe wird ausgehend von einem elektrisch isolierenden Wälzlager gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Das erfindungsgemäße elektrisch isolierende Wälzlager zur Drehlagerung eines rotierenden Bauteils gegenüber einem Tragteil umfasst:
- einen metallischen Außenring mit einer innenumfangsseitig ausgebildeten ersten Wälzkörperlaufbahnfläche,
- einen metallischen Innenring mit einer außenumfangsseitig ausgebildeten zweiten Wälzkörperlaufbahnfläche,
- mehrere zwischen der ersten und der zweiten Wälzkörperlaufbahnfläche wälzend angeordnete metallische Wälzkörper,
- eine zumindest teilweise auf dem Außenring und/oder dem Innenring und/oder den Wälzkörpern aufgebrachte Isolationsbeschichtung umfassend mindestens eine Isolationsschicht aus mindestens einem elektrisch nicht-leitenden Material, wobei die Isolationsbeschichtung angrenzend an eine metallische Oberfläche des Außenrings und/oder des Innenrings eine Haftvermittlerschicht umfasst und/oder die Isolationsbeschichtung angrenzend an eine metallische Oberfläche jedes Wälzkörpers eine Haftvermittlerschicht umfasst, wobei
   die Haftvermittlerschicht aus einem Haftvermittlermaterial besteht, das durch ein elektrisch leitfähiges Metalloxynitrid gebildet ist, und wobei
   das elektrisch nicht-leitende Material der mindestens einen Isolationsschicht aus einem Metalloxynitrid gebildet ist, derart dass zwischen dem rotierenden Bauteil und dem Tragteil ein elektrischer Widerstand von > 200 Megaohm vorliegt.

Eine solche Isolationsbeschichtung umfassend mindestens eine Isolationsschicht aus Metalloxynitrid ermöglicht es, eine ausgezeichnete elektrische Isolation zwischen den Anschlußbauteilen, wie rotierendem Bauteil und Tragteil, zu herzustellen. Durch die hohe mechanische Belastbarkeit einer solchen Isolationsbeschichtung kann diese auch in der belasteten Zone des tribologischen Kontakts des Wälzlagers eingesetzt werden. Dabei wird eine hohe Standzeit des elektrisch isolierenden Wälzlagers erzielt. Zudem lässt sich die Isolationsbeschichtung quasi bauraum-neutral in einem bevorzugten Dünnschichtverfahren aufbringen, so dass keine Designänderungen am Wälzlager oder eine Nachbearbeitung desselben im Rahmen der Herstellung notwendig sind.

Der Vorteil liegt insbesondere darin, dass sich im Gegensatz zu Oxidkeramiken als vorbekanntes Material einer Isolationsschicht die elektrischen und auch mechanischen Eigenschaften und somit auch die tribologischen Eigenschaften von Metalloxynitriden sehr genau über das angegebene Verhältnis von Sauerstoff zu Stickstoff sowie die eingesetzten Metalle als Verbindungspartner einstellen lassen. Versuche haben ergeben, dass hierdurch elektrisch isolierende Wälzlager mit einem breiten Spektrum an elektrischen und mechanischen Kennwerten in einfacher Weise herstellbar sind.

Die Isolationsbeschichtung umfasst mindestens eine Isolationsschicht, wobei lediglich eine Isolationsschicht, aber auch mehrere Isolationsschichten aus Metalloxynitriden gleicher oder unterschiedlicher Zusammensetzung vorhanden sein können.

Vorzugsweise ist eine Metallkomponente des Metalloxynitrids ausgewählt aus mindestens einem Metall der Gruppe umfassend Cr, Al, Ta, Si, Ti, V, Zr, Hf, Nb, Mo, La, Ce, Y und W (Abkürzungen entsprechend dem Periodensystem der Elemente). Beispielsweise sind geeignete Metalloxynitride: AION, SiAlON, CrON.

Um die Haftung der Isolationsbeschichtung am metallischen Außenring oder Innenring zu maximieren, umfasst die Isolationsbeschichtung angrenzend an eine metallische Oberfläche des Außenrings oder Innenrings eine Haftvermittlerschicht.

Dabei besteht die Haftvermittlerschicht aus einem Haftvermittlermaterial, das durch ein elektrisch leitendes Metalloxynitrid gebildet ist. Versuche haben ergeben, dass insbesondere diese Metallverbindungen eine Verbesserung der Haftung der Isolationsbeschichtung auf metallischen Oberflächen ermöglichen.

Weiterhin oder alternativ kann eine solche Haftvermittlerschicht auch im Bereich der Wälzkörper zur Verbesserung der Haftung der Isolationsbeschichtung an den metallischen Oberflächen der Wälzkörper eingesetzt werden.

Optional kann die Isolationsbeschichtung auch eine auf die mindestens eine Isolationsschicht aufgebrachte Deckschicht umfassen, um insbesondere die tribologischen Eigenschaften zu verbessern. Vorzugsweise ist eine solche Deckschicht als eine amorphe Kohlenstoffschicht ausgebildet, insbesondere als eine wasserstoffhaltige amorphe oder auch als eine wasserstofffreie amorphe Kohlenstoffschicht ausgebildet.

Gemäß einer bevorzugten Ausführungsform der Erfindung ist die Isolationsschicht mit einer Schichtdicke von ≤10 Mikrometern ausgebildet. Insbesondere bei dem Maximalwert dieses Dickenbereichs wird ein hohes Maß an elektrischer Isolation mit gleichzeitig hoher Lebensdauer erzielt, wobei die Schichtdicke dennoch dünn genug bleibt, so dass keine Designänderungen am Wälzlager vorgenommen werden müssen, um diesem elektrisch isolierende Eigenschaften zu verleihen.

Bei Anwesenheit einer Haftvermittlerschicht und gegebenenfalls einer Deckschicht ist es bevorzugt, wenn die Gesamtschichtdicke der Isolationsbeschichtung mit maximal 15 Mikrometern bemessen ist. Mit einer solchen Isolationsbeschichtung, welche im Bereich des Wälzlagers angeordnet ist, lässt sich der geforderte elektrische Widerstand von zumindest 200 Megaohm erzeugen.

Der elektrische Widerstand der mindestens einen Isolationsschicht lässt sich über die Materialauswahl für die mindestens eine Isolationsschicht aus Metalloxynitrid sowie über die Schichtdicke variieren, um eine gewünschte Spezifikation einzustellen. Dabei kann über eine Variation des Verhältnisses von Sauerstoff zu Stickstoff der elektrische Widerstand der Isolationsschicht variiert werden, wobei eine Erhöhung des Sauerstoffanteils zu einer Erhöhung des elektrischen Widerstandes führt. Eine Erhöhung des Stickstoffanteils führt zu einer Verringerung der Sprödigkeit der Isolationsschicht, so dass ein Einsatz im Bereich der wälzbeanspruchten Oberflächen des Wälzlagers möglich wird.

Ferner wird vorgeschlagen, die Isolationsbeschichtung möglichst im Umfang aller oder einiger der Schichten, umfassend die Haftvermittlerschicht, die mindestens eine Isolationsschicht sowie die optionale Deckschicht, mittels eines Dünnschichtverfahren aufzubringen. Bewährt hat sich hier insbesondere ein an sich bekanntes PVD- oder PACVD-Verfahren (PVD = Physical Vapour Deposition; PACVD = Plasma-Assistant Chemical Vapour Deposition). Hiermit kann eine Abscheidung der Isolationsbeschichtung aus der Gasphase durchgeführt werden, um eine hinreichend dünne Schichtaufbringung mit hoher Güte durchzuführen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen Längsschnitt durch ein elektrisch isolierendes Wälzlager in Form eines Zylinderrollenlagers, und
- Fig. 2: eine schematische Detailschnittansicht durch einen innenbeschichteten Außenring des Wälzlagers gemäß Fig. 1.

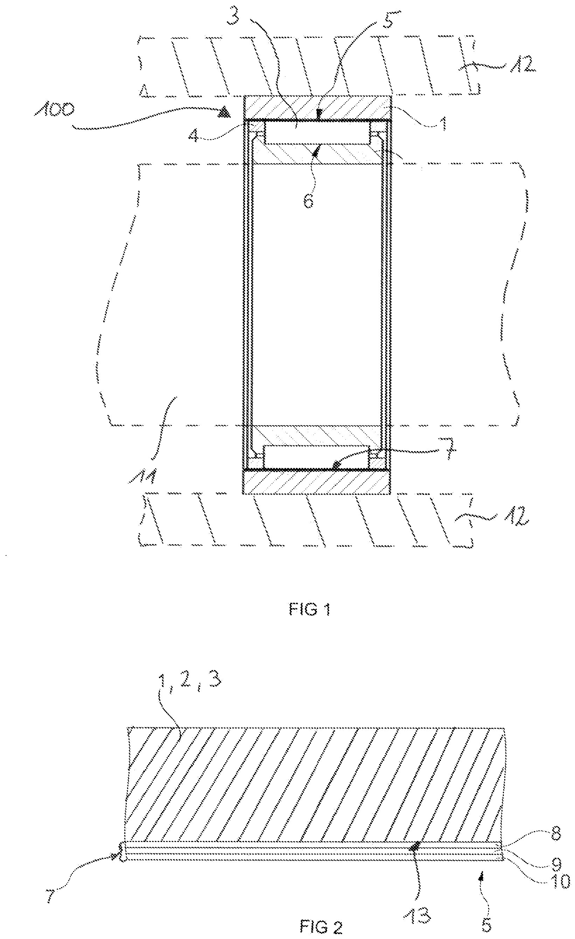

Gemäß Fig. 1 ist das elektrisch isolierende Wälzlager 100 des Ausführungsbeispiels als Radiallager ausgebildet und besteht im Wesentlichen aus einem Außenring 1, einem Innenring 2 sowie dazwischen angeordneten Wälzkörpern 3, welche in einem Käfig 4 gehalten sind. Während der Käfig 4 hier aus einem Kunststoffmaterial besteht, sind der Außenring 1, der Innenring 2 sowie die Wälzkörper 3 aus einem vergüteten Stahl gefertigt und damit materialbedingt elektrisch leitend.

Innenumfangsseitig des insoweit metallischen Außenrings 1 ist eine erste Wälzkörperlaufbahnfläche 5 ausgebildet. Korrespondierend hierzu ist außenumfangsseitig des Innenrings 2 eine zweite Wälzkörperlaufbahnfläche 6 ausgebildet. Die beiden Wälzkörperlaufbahnflächen 5 und 6 sind an die Formgebung der Wälzkörper 3 angepasst, die hier als Zylinderrollen ausgebildet sind.

Bei diesem Ausführungsbeispiel ist auf die erste Wälzkörperlaufbahnfläche 5 eine nachstehend beschriebene Isolationsbeschichtung 7 (vergleiche auch Figur 2) aufgebracht. Die Isolationsbeschichtung 7 könnte aber alternativ auch auf die Außenseite des Außenrings 1 aufgebracht sein.

Das Wälzlager 100 ist zur Drehlagerung eines rotierenden Bauteils 11 gegenüber einem Tragteil 12 ausgebildet, wobei hier der Innenring 2 am rotierenden Bauteil 11 befestigt ist und das Tragteil 12 am Außenring 1 befestigt ist. Dabei kann aber in einer alternativen Ausführungsform auch umgekehrt das rotierende Bauteil am Außenring 1 und das Tragteil 11 am Innenring befestigt sein.

Gemäß Fig. 2 besteht die hier exemplarisch anhand des Außenrings 1 beschriebene Isolationsbeschichtung 7 aus einer zunächst auf einer metallischen Oberfläche 13 des Stahlmaterials des Außenrings 1 aufgebrachten Haftvermittlerschicht 8. Auf die Haftvermittlerschicht 8 ist eine Isolationsschicht 9 aus mindestens einem elektrisch nicht-leitenden Material in Form eines Metalloxynitrids aufgebracht. Als Metalloxynitrid ist hier beispielhaft ein SiAlON eingesetzt. Die Isolationsschicht 9 weist bei diesem Ausführungsbeispiel eine Dicke von 8 Mikrometern auf. Die Isolationsbeschichtung 7 umfasst weiterhin eine optionale, auf die mindestens eine Isolationsschicht 9 aufgebrachte Deckschicht 1 aus einem wasserstoffhaltigen amorphen Kohlenstoff, um die tribologischen Eigenschaften der Isolationsbeschichtung 7 zu verbessern.

Die Haftvermittlerschicht 8, die mindestens eine Isolationsschicht 9 sowie die optionale Deckschicht 10 werden bei diesem Ausführungsbeispiel bevorzugt jeweils aus der Gasphase mittels eines Dünnschichtverfahrens abgeschieden, wobei eine Gesamtschichtdicke von 15 Mikrometern für die Isolationsbeschichtung 7 nicht überschritten wird.

Die Erfindung ist nicht beschränkt auf das vorstehend beschriebene Ausführungsbeispiel. So ist es beispielsweise auch möglich, die Isolationsbeschichtung 7 zusätzlich oder alternativ auf die Wälzkörper 3 des Wälzlagers 100 aufzubringen, wie in Figur 2 durch das Bezugszeichen 3 angedeutet. Ebenso kann alternativ oder zusätzlich eine Aufbringung der Isolationsbeschichtung 7 auf den Innenring 2, insbesondere die Wälzkörperlaufbahnfläche 6 des Innenrings 2 erfolgen, wie in Figur 2 durch das Bezugszeichen 2 angedeutet.

Natürlich sind auch Wälzkörper 3 mit anderen Querschnittsformen denkbar. Dabei kann eine Anordnung der Isolationsbeschichtung 9 auch auf einer Außenumfangsfläche des Außenrings 1 und/oder einer Innenumfangsfläche des Innenrings 2 erfolgen.

Obwohl das Ausführungsbeispiel auf ein Radiallager gerichtet ist, können natürlich auch andere Wälzlagertypen erfindungsgemäß ausgestattet werden.

### Bezuqszeichenliste

- 1: Außenring
- 2: Innenring
- 3: Wälzkörper
- 4: Käfig
- 5: erste Wälzkörperlaufbahnfläche
- 6: zweite Wälzkörperlaufbahnfläche
- 7: Isolationsbeschichtung
- 8: Haftvermittlerschicht
- 9: Isolationsschicht
- 10: Deckschicht
- 11: rotierendes Bauteil oder Tragteil
- 12: Tragteil oder rotierendes Bauteil
- 13: metallische Oberfläche
- 100: Wälzlager

## Patentansprüche

1. Elektrisch isolierendes Wälzlager (100) zur Drehlagerung eines rotierenden Bauteils (11) gegenüber einem Tragteil (12), umfassend:
- einen metallischen Außenring (1) mit einer innenumfangsseitig ausgebildeten ersten Wälzkörperlaufbahnfläche (5),
- einen metallischen Innenring (2) mit einer außenumfangsseitig ausgebildeten zweiten Wälzkörperlaufbahnfläche (6),
- mehrere zwischen der ersten und der zweiten Wälzkörperlaufbahnfläche (5, 6) wälzend angeordnete metallische Wälzkörper (3),
- eine zumindest teilweise auf dem Außenring (1) und/oder dem Innenring (2) und/oder den Wälzkörpern (3) aufgebrachte Isolationsbeschichtung (7) umfassend mindestens eine Isolationsschicht (9) aus mindestens einem elektrisch nicht-leitenden Material, wobei
die Isolationsbeschichtung (7) angrenzend an eine metallische Oberfläche (13) des Außenrings (1) und/oder des Innenrings (2) eine Haftvermittlerschicht (8) umfasst und/oder die Isolationsbeschichtung (7) angrenzend an eine metallische Oberfläche (13) jedes Wälzkörpers (3) eine Haftvermittlerschicht (8) umfasst, wobei die Haftvermittlerschicht (8) aus einem Haftvermittlermaterial besteht, das durch ein elektrisch leitfähiges Metalloxynitrid gebildet ist, und wobei
das elektrisch nicht-leitende Material der mindestens einen Isolationsschicht (9) aus einem Metalloxynitrid gebildet ist, derart dass zwischen dem rotierenden Bauteil (11) und dem Tragteil (12) ein elektrischer Widerstand von > 200 Megaohm vorliegt.

2. Elektrisch isolierendes Wälzlager nach Anspruch 1,
**dadurch gekennzeichnet, dass** eine Metallkomponente des Metalloxynitrids ausgewählt ist aus mindestens einem Metall der Gruppe umfassend: Cr, Al, Ta, Si, Ti, V, Zr, Hf, Nb, Mo, La, Ce, Y, W.

3. Elektrisch isolierendes Wälzlager nach einem der Ansprüche 1 oder 2,
**dadurch gekennzeichnet, dass** die Isolationsbeschichtung (7) eine auf die mindestens eine Isolationsschicht (9) aufgebrachte Deckschicht (10) aus amorphem Kohlenstoff umfasst.

4. Elektrisch isolierendes Wälzlager nach einem der Ansprüche 1 bis 3,
**dadurch gekennzeichnet, dass** die mindestens eine Isolationsschicht (9) eine Schichtdicke im Bereich von > 0 bis ≤10 Mikrometern aufweist.

5. Elektrisch isolierendes Wälzlager nach mindestens einem der vorstehenden Ansprüche,
**dadurch gekennzeichnet, dass** die Isolationsbeschichtung (7), umfassend die mindestens eine Isolationsschicht (9), die Haftvermittlerschicht (8), optional weiterhin die Deckschicht (10), eine Gesamtschichtdicke im Bereich von > 0 bis ≤15 Mikrometern aufweist.

6. Elektrisch isolierendes Wälzlager nach mindestens einem der vorstehenden Ansprüche,
**dadurch gekennzeichnet, dass** die Isolationsbeschichtung (7) zumindest teilweise mittels eines PVD- oder eines PACVD-Verfahrens aufgebracht ist.

7. Elektrisch isolierendes Wälzlager nach mindestens einem der vorstehenden Ansprüche,
**dadurch gekennzeichnet, dass** die Isolationsbeschichtung (7) zumindest auf der ersten Wälzkörperlaufbahnfläche (5) des metallischen Außenrings (1) und/oder zumindest auf der zweiten Wälzkörperlaufbahnfläche (6) des metallischen Innenrings (2) und/oder zumindest auf einer metallischen Oberfläche (13) der Wälzkörper (3) aufgebracht ist.

## Claims

1. An electrically insulating rolling bearing (100) for rotatably mounting a rotating component (11) with respect to a support part (12), comprising:
- a metallic outer ring (1) having a first rolling element raceway surface (5) formed on the inner circumference,
- a metallic inner ring (2) having a second rolling element raceway surface (6) formed on the outer circumference,
- a plurality of metallic rolling elements (3) arranged in a rolling manner between the first and the second rolling element raceway surfaces (5, 6),
- an insulation coating (7) applied at least partially to the outer ring (1) and/or the inner ring (2) and/or the rolling elements (3) comprising at least one insulation layer (9) made of at least one electrically non-conductive material, wherein
the insulation coating (7) adjoining a metallic surface (13) of the outer ring (1) and/or the inner ring (2) comprises an adhesion promoter layer (8) and/or the insulation coating (7) adjoining a metallic surface (13) of each rolling element (3) comprises an adhesion promoter layer (8), wherein the adhesion promoter layer (8) consists of an adhesion promoter material which is formed by an electrically conductive metal oxynitride, and wherein
the electrically non-conductive material of the at least one insulation layer (9) is formed from a metal oxynitride such that there is an electrical resistance of > 200 megohms between the rotating component (11) and the support part (12).

2. The electrically insulating rolling bearing according to claim 1,
**characterised in that** a metal component of the metal oxynitride is selected from at least one metal from the group comprising: Cr, Al, Ta, Si, Ti, V, Zr, Hf, Nb, Mo, La, Ce, Y, W.

3. The electrically insulating rolling bearing according to one of claims 1 or 2,
**characterised in that** the insulation coating (7) comprises a cover layer (10) of amorphous carbon applied to the at least one insulation layer (9).

4. The electrically insulating rolling bearing according to one of claims 1 to 3,
**characterised in that** the at least one insulation layer (9) has a layer thickness in the range from > 0 to ≤ 10 micrometres.

5. The electrically insulating rolling bearing according to at least one of the preceding claims, **characterised in that** the insulation coating (7), comprising the at least one insulation layer (9), the adhesion promoter layer (8), optionally also the cover layer (10), has a total layer thickness in the range from > 0 to ≤ 15 micrometres.

6. The electrically insulating rolling bearing according to at least one of the preceding claims, **characterised in that** the insulation coating (7) is applied at least partially by means of a PVD or a PACVD process.

7. The electrically insulating rolling bearing according to at least one of the preceding claims, **characterised in that** the insulation coating (7) is applied at least to the first rolling element raceway surface (5) of the metallic outer ring (1) and/or at least to the second rolling element raceway surface (6) of the metallic inner ring (2) and/or at least to a metallic surface (13) of the rolling element (3).

## Revendications

1. Palier à roulement (100) électriquement isolant destiné au logement rotatif d'un composant (11) rotatif par rapport à un élément porteur (12), comprenant :
- une bague extérieure (1) métallique comportant une première surface de chemin de roulement de corps roulants (5) formée côté circonférence intérieure,
- une bague intérieure (2) métallique comportant une seconde surface de chemin de roulement de corps roulants (6) formée côté circonférence extérieure,
- une pluralité de corps roulants (3) métalliques agencés de manière à rouler entre la première et la seconde surface de chemin de roulement de corps roulants (5, 6),
- un revêtement isolant (7) appliqué au moins partiellement sur la bague extérieure (1) et/ou la bague intérieure (2) et/ou les corps roulants (3) comprenant au moins une couche isolante (9) composée d'au moins une matière non électroconductrice, dans lequel le revêtement isolant (7) comprend, adjacente à une surface métallique (13) de la bague extérieure (1) et/ou de la bague intérieure (2), une couche de promoteur d'adhérence (8) et/ou le revêtement isolant (7) comprend, adjacente à une surface métallique (13) de chaque corps roulant (3) une couche de promoteur d'adhérence (8), dans lequel la couche de promoteur d'adhérence (8) est constituée d'une matière de type promoteur d'adhérence, laquelle est formée d'un oxynitrure de métal électroconducteur et dans lequel
la matière non électroconductrice de l'au moins une couche isolante (9) est formée d'un oxynitrure de métal de telle sorte qu'il existe une résistance électrique > 200 mégohms entre le composant (11) rotatif et l'élément porteur (12).

2. Palier à roulement électriquement isolant selon la revendication 1,
**caractérisé en ce qu'**un constituant métallique de l'oxynitrure de métal est choisi parmi au moins un métal du groupe comprenant : Cr, Al, Ta, Si, Ti, V, Zr, Hf, Nb, Mo, La, Ce, Y, W.

3. Palier à roulement électriquement isolant selon l'une quelconque des revendications 1 ou 2, **caractérisé en ce que** le revêtement isolant (7) comprend une couche de recouvrement (10) en carbone amorphe appliquée sur l'au moins une couche isolante (9).

4. Palier à roulement électriquement isolant selon l'une quelconque des revendications 1 à 3, **caractérisé en ce que** l'au moins une couche isolante (9) présente une épaisseur de couche dans la plage allant de > 0 à ≤ 10 micromètres.

5. Palier à roulement électriquement isolant selon au moins l'une quelconque des revendications précédentes,
**caractérisé en ce que** le revêtement isolant (7), comprenant l'au moins une couche isolante (9), la couche de promoteur d'adhérence (8), éventuellement également la couche de recouvrement (10), présente une épaisseur de couche totale dans la plage allant de > 0 à ≤ 15 micromètres.

6. Palier à roulement électriquement isolant selon au moins l'une quelconque des revendications précédentes,
**caractérisé en ce que** le revêtement isolant (7) est appliqué au moins partiellement au moyen d'un procédé PVD ou PACVD

7. Palier à roulement électriquement isolant selon au moins l'une quelconque des revendications précédentes,
**caractérisé en ce que** le revêtement isolant (7) est appliqué au moins sur la première surface de chemin de roulement de corps roulants (5) de la bague extérieure (1) métallique et/ou au moins sur la seconde surface de chemin de roulement de corps roulants (6) de la bague intérieure (2) métallique et/ou au moins sur une surface métallique (13) du corps roulant (3).
